**Europäisches Patentamt**

**European Patent Office**

**Office européen des brevets**

(11) Veröffentlichungsnummer: **0 133 874 B1**

# EUROPÄISCHE PATENTSCHRIFT

(45) Veröffentlichungstag der Patentschrift:
03.09.86

(21) Anmeldenummer: 84106197.1

(22) Anmeldetag: 30.05.84

(51) Int. Cl.⁴: **C 04 B 35/64,** C 04 B 35/56, **C 04 B 35/58**

(54) Verfahren zum heissisostatischen Pressen von Formteilen aus Keramik.

(30) Priorität: 30.06.83 DE 3323509

(43) Veröffentlichungstag der Anmeldung:
13.03.85 Patentblatt 85/11

(45) Bekanntmachung des Hinweises auf die Patenterteilung:
03.09.86 Patentblatt 86/36

(84) Benannte Vertragsstaaten:
FR GB IT NL SE

(56) Entgegenhaltungen:
**Keine Entgegenhaltungen**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Hüther, Werner, Dr.- Ing., Nikolaus-Lenau- Strasse 8, D-8047 Karlsfeld (DE)**

EP 0 133 874 B1

## Beschreibung

Die Erfindung betrifft ein Verfahren zum heißisostatischen Pressen vop Formteilen aus Keramik.

Es sind verschiedene Verfahren zum heißisostatischen Pressen von keramischen Formteilen bekannt. Es wird bei einem bekannten Herstellungsverfahren ein Pulverkörper vorab kaltisostatisch gepreßt oder spritzgegossen und anschließend mit einer gasundurchlässigem Kapsel versehen und dann heißisostatisch gepreßt. Bei einem anderen bekannten Fertigungsverfahren wird der vorgefertigte Pulverkörper gesintert, wobei die Dichte unterhalb von ca. 95% bleibt, so daß die Porosität offenbleibt. Der Körper wird dann ebenfalls mit einer gasundurchlässigen Kapsel versehen und heißisostatisch gepreßt. Ein drittes bekanntes Herstellungsverfahren kennzeichnet sich durch die Vorfertigung eines Pulverkörpers, der auf eine Dichte von größer als 95% gesintert wird, so daß die Porosität geschlossen ist, und wird dann heißisostatisch gepreßt. Für die Kapsel nach den erstgenannten beiden Fertigungsverfahren wird üblicherweise Glas verwendet.

Es ist schwierig, nach dem Stand der Technik die Kapsel zu entfernen. Des weiteren ist von Nachteil, daß die Temperatur, bei der das heißisostatische Pressen vollzogen wird, durch die Erweichung des Glases bei hoher Temperatur auf 1700°C bis 1850°C beschränkt ist. Der Pulverkörper enthält Sinterhilfsmittel, die die Hochtemperaturfestigkeit des Körpers (z.B. MgO oder $Y_2O_3$ in $Si_3N_4$) oder die Festigkeit (z.B. B oder Al oder C in SiC) oder auch die Wärmeleitfähigkeit (z.B. B oder Al oder C in SiC) verschlechtern. Sinterhilfsmittel sind grundsätzlich erforderlich, um das heißisostatische Pressen bei einer Temperatur zu ermöglichen, die von der Glaskapsel noch ertragen wird (nach den erstgenannten beiden bekannten Fertigungsverfahren) oder um die gewünschte Sinterung zu erzielen (nach den letztgenannten beiden Fertigungsverfahren). Wünschenswert ist ein möglichst geringer Sinterhilfeanteil, um die genannten Nachteile zu vermeiden.

Aufgabe der Erfindung ist die Schaffung eines Verfahrens zum heißisostatischen Pressen von Formteilen aus Keramik, nach dem mit Hilfe einfacher Mittel eine Kapsel für den vorgefertigten Pulverkörper ausgebildet wird, die sich leicht entfernen läßt oder auf dem Formteil verbleiben kann, und die ferner bei der für das Verdichten des Keramikteils erforderlichen Temperatur nur geringfügig erweicht.

Gelöst wird die der Erfindung zugrundeliegende Aufgabe dadurch, daß auf einem vorgefertigten keramischen Vorkörper eine Schicht aus amorphem Kohlenstoff aufgebracht und anschließend das Teil heißisostatisch gepreßt wird.

Die Kohlenstoffschicht kann durch eine Wärmebehandlung bei 600 bis 1200°C an Luft durch Verbrennen entfernt werden.

Zwecks Aufbringung des amorphen Kohlenstoffs wird zweckmäßigerweise der vorgefertigte keramische Vorkörper mit einem Phenolharz, Epoxid-Harz oder Polyimidharz ein- oder mehrmalig bestrichen oder darin eingetaucht. Der harzbestrichene oder getauchte Vorkörper wird durch eine Wärmebehandlung bei 150° bis 250°C aushärten gelassen, wobei durch eine weitere Wärmebehandlung ein Verkokungsvorgang des Harzes eintritt. Letztgenannte Wärmehandlung ist ein langsames Aufheizen des Vorkörpers unter Schutzgas oder Vakuum, wobei eine Aufheizung von ca. 10°C pro Stunde erfolgt.

Es wird angestrebt, eine gasdichte Schicht aus amorphem Kohlenstoff auszubilden. Ist bei einmaligem Bestreichen oder Eintauchen in Harz noch keine gasdichte Schicht ausgebildet, wird der Körper erneut mit Harz bestrichen und das Verfanren wiederholt, bis eine gasdichte Schicht vorhanden ist. Dies ist meist nicht öfter als ein- bis dreimal erforderlich.

Statt des Phenolharzes kann ein Epoxid-Harz oder Polyimidharz verwendet werden. Das Aufbringen des Harzes kann durch Wirbelsintern erfolgen, und zwar insbesondere bei Epoxid- und Polyimid-harzen. Durch das Wirbelsintern entsteht eine besonders gleichmäßige Schicht.

Der Verkokungsvorgang des Harzes läßt sich unter Druck (z.B. Ar oder $N_2$) schneller durchführen. Dies geschieht bevorzugt beim ersten Verkohlungsprozeß, die weiteren Verkohlungsprozesse erfolgen unter Vakuum, weil sonst unter der entstehenden Schicht Gas eingeschlossen wird, das die Verdichtung beim heißisostatischen Pressen behindert (Ausnahme: Einschluß von Gas ist erwünscht).

Als Vorkörper werden verwendet:
- Teile aus reaktionsgebundenem Siliziumnitrid, die 0,5 bis 5% MgO oder $Y_2O_3$ enthalten.
- Pulverkörper aus $Si_3N_4$-Pulver, bestehend aus $Si_3N_4$-Pulver mit einer Korngröße von 0,2 μm bis 40μm, eine mittlere Korngröße von 1 bis 2μm wird bevorzugt (maximale Korngröße < 10μm). Die Reinheit beträgt 95 bis 99,9%, insbesondere 99%. Der Pulverkörper kann mit einer Sinterhilfe versehen werden, z.B. MgO oder $Y_2O_3$-Pulver, mit einer Korngröße wie beim $Si_3N_4$-Pulver mit Anteilen von 0,1 bis 5%. Durch die Zugabe von Sinterhilfsmitteln lassen sich die plastischen Eigenschaften des Formteils beeinflussen.
- Pulverkörper aus Siliziumcarbid: Korngröße wie oben, Reinheit 95% bis 99,9%, bevorzugt 99%. Der Siliziumcarbid-Vorkörper kann mit Zusätzen, die das Kornwachstum behindern, versehen werden, z.B. mit 0,2 bis 5% $Al_2O_3$, MgO, TiN, $Y_2O_3$, TiC. Korngröße: 0,2 bis 10μm (bevorzugt: mittlere Korngröße < 1 μm maximale Korngröße < 10 μm).

Die Verringerung des Kornwachstums während einer heißisostatischen Preßbehandlung hat bessere mechanische Eigenschaften (Festigkeit) zur Folge.

Das heißisostatische Pressen erfolgt bei Temperaturen von 1700°C bis 2500°C bei Drücken von 500 bis 3000 bar. Die Dauer der Behandlung beträgt eine halbe bis acht Stunden. Beim heißisostatischen Pressen von $Si_3N_4$-Teilen ist es von Vorteil, das Verkohlen des Harzes zur Herstellung der Schicht aus amorphem Kohlenstoff unter Stickstoff-Atmosphäre von 0,1 bis 300 bar durchzuführen. Der Stickstoff wird in der Kapsel eingeschlossen und verhindert eine thermische Dissoziation des $Si_3N_4$.

Die Pulverkörper werden, wie an sich bekannt, durch Spritzgießen oder kaltisostatisches Pressen und Bearbeiten im Grünzustand hergestellt.

Mithin wird durch das erfindungsgemäße Verfahren eine gasdichte Schicht leicht auf dem Vorkörper erzeugt. Die Schicht ist bei einer Temperatur, bei der das heißisostatische Pressen stattfindet, hinreichend plastisch verformbar. Die Schicht dringt nur unwesentlich in den Keramikkörper ein und kann gegebenenfalls durch eine Wärmebehandlung (bei 500 bis 1200°C an Luft durch Verbrennen) entfernt werden.

**Patentansprüche**

1. Verfahren zur Herstellung von Keramikformteilen, bei dem ein Vorkörper aus Siliziumnitrid oder Siliziumkarbid mit einer gasdichten Kapsel versehen, danach heißisostatisch gepreßt und danach die Kapsel ggfs. entfernt wird, dadurch gekennzeichnet, daß die gasdichte Kapsel durch Erzeugen einer Schicht aus amorphem Kohlenstoff auf der Oberfläche des Vorkörpers gebildet wird und die Entfernung der Kapsel durch Verbrennen der Kohlenstoffschicht erfolgt.

2. Verfahren nach Anspruch 1, dadurch gekennzeichnet, daß der vorgefertigte keramische Vorkörper mit einem Phenolharz, Epoxid-Harz oder Polyimidharz mehrmalig bestrichen oder darin eingetaucht wird.

3. Verfahren nach Anspruch 2, dadurch gekennzeichnet, daß der harzbestrichene oder getauchte Vorkörper durch eine Wärmebehandlung bei 150 bis 250°C aushärten gelassen wird.

4. Verfahren nach Anspruch 2 oder 3, dadurch gekennzeichnet, daß der harzbestrichene oder getauchte Vorkörper einem Verkokungsvorgang des Harzes durch eine weitere Wärmebehandlung unterzogen wird.

5. Verfahren nach Anspruch 4, daß die weitere Wärmebehandlung des Verkokungsvorgangs eine langsame Aufheizung des Vorkörpers unter Schutzgas oder Vakuum ist.

6. Verfahren nach Anspruch 3 bis 5, dadurch gekennzeichnet, daß die Wärmebehandlungen (Aushärtung bzw. Verkokung) nach jedem Bestreichungs- oder Tauchvorgang des Vorkörpers durchgeführt werden.

7. Verfahren nach Anspruch 4 bis 6, dadurch gekennzeichnet, daß der erste Verkokungsvorgang unter Druck und eventuell nachfolgende Verkokungsvorgänge unter Vakuum erfolgen.

8. Verfahren nach Anspruch 1 bis 7, dadurch gekennzeichnet, daß das Aufbringen des Harzes durch Wirbelsintern erfolgt.

9. Verfahren nach Anspruch 1 bis 8, dadurch gekennzeichnet, daß als Vorkörper Teile aus reaktionsgebundenem Siliziumnitrid verwendet werden, die 0,5 bis 5% MgO oder $Y_2O_3$ enthalten.

10. Verfahren nach Anspruch 1 bis 8, dadurch gekennzeichnet, daß als Vorkörper Pulverkörper aus $Si_3N_4$-Pulver mit einer mittleren Korngröße von 1 bis 2μm und einer Reinheit von 99% verwendet werden.

11. Verfahren nach Anspruch 10, dadurch gekennzeichnet, daß eine Sinterhilfe in Form von MgO- oder $Y_2O_3$-Pulver verwendet wird.

12. Verfahren nach Anspruch 1 bis 8, dadurch gekennzeichnet, daß als Vorkörper Pulverkörper aus Siliziumcarbid mit einer mittleren Korngröße von 1 bis 2 μm und einer Reinheit von 98% verwendet werden.

13. Verfahren nach Anspruch 12, dadurch gekennzeichnet, daß der Siliziumcarbid-Vorkörper mit Kornwachstumsverhinderungszusätzen versehen wird.

**Claims**

1. A method of manufacturing ceramic mouldings in which a blank consisting of silicon nitride or silicon carbode is provided with a gasproof capsule and is afterwards moulded isostatically under heat, the capsule then possibly being removed, characterized in that the gasproof capsule is formed by creating a layer of amorphous carbon on the surface of the blank, the capsule being removed by combustion of the carbon coating.

2. Method according to Claim 1, characterized in that the prepared ceramic blank is provided with several coatings of or is dipped into a phenol resin, epoxy resin or polyamide resin.

3. Method according to Claim 2, characterized in that the resin coated or dipped blank is allowed to harden out by being treated under heat at 150 to 250°C.

4. Method according to Claim 2 or 3, characterized in that the resin coated or dipped blank is subjected to a resin carbonizing process via a further heat treatment.

5. Method according to Claim 4, characterized in that the further heat treatmemt of the carbonizing process is a slow heating of the blank under barrier gas or in a vacuum.

6. Method according to Claim 3 to 5, characterized in that the heat treatments (hardening out or carbonizing) are carried out after each coating or dipping of the blank.

7. Method according to Claim 4 to 6, characterized in that the first carbonizing process is carried out under pressure while any subsequent carbonizing processes are carried out under a vacuum.

8. Method according to Claim 1 to 7. characterized in that the resin is applied by whirl sintering.

9. Method according to Claim 1 to 8, characterized in that the blanks used are parts which consist of reaction-bonded silicon nitride and contain 0.5 to 5% MgO or $Y_2O_3$.

10. Method according to Claim 1 to 8, characterized in that the blanks used are bodies of powder consisting of $Si_3N_4$ powder with an average granulation of 1 to 2 µm and a purity level of 99%.

11. Method according to Claim 10, characterized in that a sintering aid is used which takes the form of MgO or $Y_2O_3$ powder.

12. Method accordimg to Claim 1 to 8, characterized in that the blanks used are bodies oi powder consisting of silicon carbide with am average Branular size of 1 to 2 µm and a purity level of 98%.

13. Method according to Claim 12, characterized in that the silicon carbide blanks comprise grain growth preventing additives.

## Revendications

1°) Procédé de fabrication de pieces moulées en céramique, procédé selon lequel on munit une ébauche en nitrure de silicium ou en carbure de silicium d une capsule étanche au gaz, puis on presse de façon isostatique à chaud, puis on élimine le cas échéant la capsule, caractérisé en ce que la capsule étanche au gaz est formée par une couche de carbone amorphe réalisée à la surface de l'ébauche et en ce que la capsule est enlevée par combustion de la couche de carbone.

2°) Procédé selon la revendication 1, caractérisé en ce que l'ébauche préfabriquée en céramique est revêtue d'une ou plusieurs couches de résine phénolique, de résine époxyde ou de résine de polyimide appliquées sur la pièce ou appliquées par immersion.

3°) Procédé selon la revendication 2, caractérisé en ce que l'ébauche revêtue de résine ou ayant été immergée dans de la résine est durcie par un traitement thermique à une température comprise entre 150 et 250°C.

4°) Procédé selon la revendication 2 ou 3, caractérisé en ce que l'ébauche revêtue de résine ou immergée dans de la résine est soumise à une phase de cokéification de la résine par un autre traitement thermique.

5°) Procédé selon la revendication 4, caractérisé en ce que cet autre traitement thermique de cokéification correspond à un chauffage lent de l'ébauche sous un gaz protecteur ou sous vide.

6°) Procédé selon les revendications 3 à 5, caractérisé en ce que les traitements thermiques (durcissage, cokéification) sont effectués après chaque revêtement ou chaque immersion de l'ébauche.

7°) Procédé selon les revendications 4 à 6, caractérisé en ce que la première phase de cokéification se fait sous pression et les éventuelles phases de cokéification ultérieures se font sous vide.

8°) Procédé selon les revendications 1 à 7, caractérisé en ce que l'application de la résine se fait dans un lit fluidisé.

9°) Procédé selon les revendications 1 à 8, caractérisé en ce que les ébauches sont des pièces en nitrure de silicium, ayant réagi, et contenant 0,5 à 5 % de MgO ou $Y_2O_3$.

10°) Procédé selon les revendications 1 à 8, caractérisé en ce que l'ébauche est une pièce en poudre de $Si_3H_4$ ayant une granulométrie moyenne comprise entre 1 et 2 microns et une pureté de 99 %.

11°) Procédé selon la revendication 10, caractérisé en ce qu on utilise un agent de frittage sous la forme d'une poudre de MgO ou de $Y_2O_3$.

12°) Procédé selon les revendications 1 à 8, caractérisé en ce que comme ébauche, on utilise une pièce en poudre de carbure de silicium ayant une granulométrie moyenne de 1 à 2 microns et une pureté de 98 %.

13°) Procédé selon la revendication 12, caractérisé en ce que l'ébauche en carbure de silicium contient des additifs d'inhibition du développement des grains.